# EUROPEAN PATENT APPLICATION

(11) **EP 2 927 554 A1**
(43) Date of publication of application: **07.10.2015**
(21) Application number: 15150228.3
(22) Date of filing: 06.01.2015
(51) Int. Cl.: F16L 37/088

(54) **Fast detachable pipe connector**

(30) Priority: 31.03.2014 CN 201420148392 U
(71) Applicant: Xiamen Runner Industrial Corporation, Xiamen 361021 (CN)
(72) Inventor: Ye, Shun- Quan, 361021 Xiamen (CN); Li, Zhang- Shen, 361021 Xiamen (CN); Chen, Xi- Min, 361021 Xiamen (CN)
(74) Representative: Lang, Christian

(57) **Abstract**

A fast detachable pipe connector includes a first pipe connector (1), and a second pipe connector (2) inserted into the first pipe connector. In a center of the first pipe connector first ring shape slot (11) is provided, while the first ring shape slot is provided with an elastic ring (3) having an indention (35). On a bottom portion of the first ring shape slot an opening (12) in communication with interior of the first pipe connector is provided. On the elastic ring a barrier block (31) extending from the opening to interior of the first pipe connector is provided, and a handle (32) is provided near the indentation of the elastic ring. The fast detachable pipe connector is simple in construction, optimized in design, so that its installation and detachment can be achieved easily and swiftly.

## Description

### BACKGROUND OF THE INVENTION

### Field of the Invention

The present invention relates to a pipe connector, and in particular to a fast detachable pipe connector.

### THE PRIOR ARTS

In the conventional piping, the connection between two pipes can be realized by two types of connectors: a fixed type connector, and a detachable type connector. The fixed type connector includes: welding type connector, gluing type connector, or (heat) fusion type connector; while the detachable type connector includes screw-thread type connector and spring-press rotation type connector. Presently, the fixed type connector is used less frequently, since the connector is fixed and can not be detached after connection; while the detachable type connector has the shortcomings in that, its structure is rather complicated, and it has difficulties in processing, assembly, and detachment.

Therefore, presently, the design and performance of the pipe connector is not quite satisfactory, and it has much room for improvement.

### SUMMARY OF THE INVENTION

In view of the problems and drawbacks of the prior art, the present invention provides a fast detachable pipe connector, that is simple in construction and optimized in design, such that it can be attached and detached easily and swiftly.

A major objective of the present invention is to provide a fast detachable pipe connector, and that can be realized in the following embodiment.

In the present invention, the fast detachable pipe connector includes: a first pipe connector, and a second pipe connector inserted into the first pipe connector. In the center of the first pipe connector is provided with a first ring shape slot, while in the first ring shape slot is provided with an elastic ring having an indent. On the bottom portion of the first ring shape slot is provided with an opening in communication with the interior of the first pipe connector. On the elastic ring is provided with a barrier block extending from the opening to the interior of the first pipe connector. On the second pipe connector is provided with a second ring shape slot acting in cooperation with the barrier block, and a handle is provided near the opening of the elastic ring.

In an embodiment of the present invention, a barrier slot is provided on the outer wall of the first pipe connector on a side of the opening, to act in cooperation with a side end face of the barrier block.

In an embodiment of the present invention, the end face of the barrier block acting in cooperation with the second ring shape slot, is a slant face. The slant face comes near to the axis line of the first pipe connector from top to bottom.

In an embodiment of the present invention, the upper end of the slant face is on the same level with the inner wall of the first pipe connector, or it is located on the outer perimeter of the inner wall of the first pipe connector.

In an embodiment of the present invention, on the first pipe connector is provided with a pair of symmetric openings, so that on the elastic ring is provided with a pair of barrier blocks corresponding to the openings.

In an embodiment of the present invention, a seal ring is provided at the lower end of the second ring shape slot, and between the first pipe connector and the second pipe connector.

The fast detachable pipe connector of the present invention is simple in construction, optimized in design, so that its installation and detachment can be realized easily and swiftly. Therefore, in the manufacturing process, the components are simplified, to facilitate its assembly, so that it is easy and convenient to implement.

Further scope of the applicability of the present invention will become apparent from the detailed descriptions given hereinafter. However, it should be understood that the detailed descriptions and specific examples, while indicating preferred embodiments of the present invention, are given by way of illustration only, since various changes and modifications within the spirit and scope of the present invention will become apparent to those skilled in the art from this detailed descriptions.

### BRIEF DESCRIPTION OF THE DRAWINGS

The related drawings in connection with the detailed descriptions of the present invention to be made later are described briefly as follows, in which:
Fig. 1 is a schematic diagram of a first pipe connector and a second pipe connector before connection according to an embodiment of the present invention;
Fig. 2 is a schematic diagram of a first pipe connector and a second pipe connector after connection according to an embodiment of the present invention;
Fig. 3 is an exploded view of a fast detachable pipe connector according to an embodiment of the present invention;
Fig. 4 is a schematic diagram of an elastic ring according to an embodiment of the present invention;
Fig. 5 is a schematic diagram of an elastic ring before a handle is pushed according to an embodiment of the present invention; and
Fig. 6 is a schematic diagram of an elastic ring after a handle is pushed according to an embodiment of the present invention.

### DETAILED DESCRIPTION OF THE PREFERRED EMBODIMENT

The purpose, construction, features, functions and advantages of the present invention can be appreciated and understood more thoroughly through the following detailed description with reference to the attached drawings.

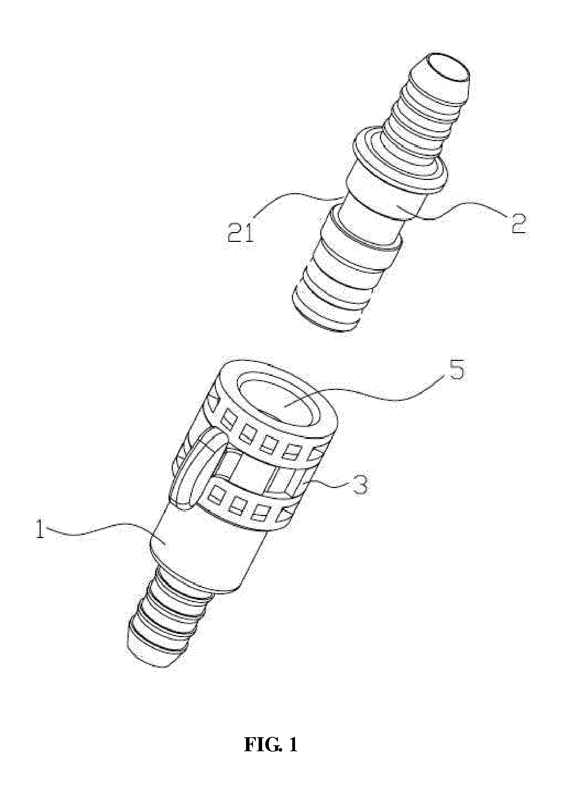

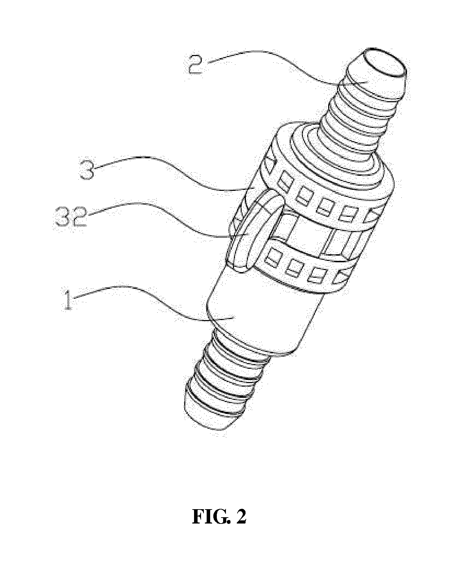

Refer to Figs. 1 and 2 respectively for a schematic diagram of a first pipe connector and a second pipe connector before connection according to an embodiment of the present invention, and a schematic diagram of a first pipe connector and a second pipe connector after connection according to an embodiment of the present invention. As shown in Figs.1 and 2, the fast detachable pipe connector includes a first pipe connector 1, and a second pipe connector 2 inserted into the first pipe connector 1. The two pipe connectors are connected respectively to a pipe. In the first pipe connector 1 is provided with a first ring shape slot 11. In the first ring shape slot 11 is provided with an elastic ring 3 having indention 35, and outer wall of the elastic ring 3 is on the same surface level with the outer wall of the first pipe connector 1. On the bottom portion of the first ring shape slot 11 is provided with an opening 12 in communication with the interior of the first pipe connector 1. On the elastic ring 3 is provided with a barrier block 31 extending from the opening to the interior of the first pipe connector 1. In other words, the barrier block 31 can be extended into the water passage channel 5 in the interior of the first pipe connector 1. On the second pipe connector 2 is provided with a second ring shape slot 21 acting in cooperation with the barrier block 31. In the operation of the present embodiment, the barrier block 31 can be extended into the second ring shape slot 21, so that the second pipe connector 2 is fastened and blocked in the first pipe connector. Near an end of the opening of the elastic ring 3 is provided with a handle 32, to facilitate driving the elastic ring 3, and realize easy and swift connection and detachment of the first pipe connector 1 and the second pipe connector 2.

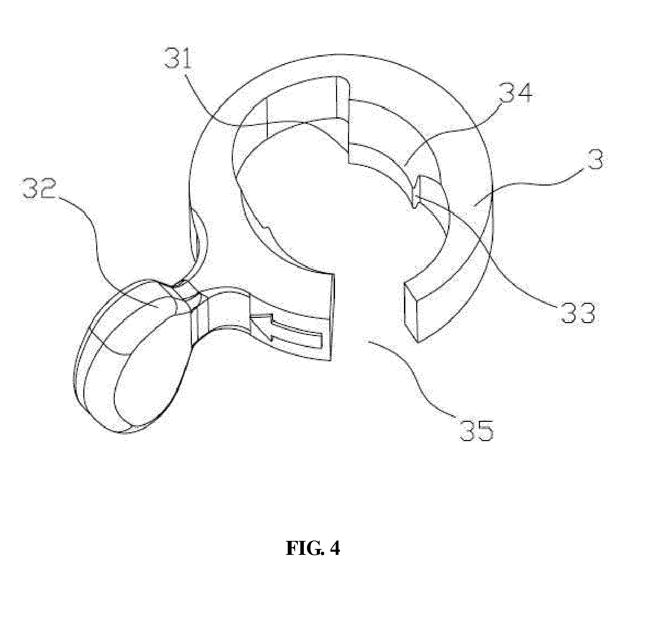

Refer to Fig. 4 for a schematic diagram of an elastic ring according to an embodiment of the present invention. As shown in Fig. 4, in order to prevent the elastic ring to be detached form the first ring shape slot for being applied a too strong force, a barrier slot 13 is provided on the outer wall of the first pipe connector 1 near a side of the opening, to act in cooperation with the side end face 33 of the barrier block 31. In other words, when the elastic ring is opened to a certain extent, the side end face of the barrier block is blocked by the barrier slot 13. Meanwhile, the barrier block 31 removes the restriction on the second pipe connector 2.

Also, as shown in Fig. 4, in order to facilitate fast and convenient installation of the pipe connector, the end face of the barrier block 31 acting in cooperation with the second ring shape slot 21, is a slant face 34. The slant face 34 comes near to the axis line of the first pipe connector 1 from top to bottom. When the second pipe connector 2 is inserted into the first pipe connector 1, through the action of the slant face 34, the elastic ring 3 extends outward, to complete the installation of the connection pipe.

In a preferred embodiment of the present invention, the upper end of the slant face 34 is on the same level with the inner wall of the first pipe connector 1, or it is located on the outer perimeter of the inner wall of the first pipe connector 1. Namely, the upper end of the slant face 34 will not extend into the water passage channel inside the first pipe connector 1.

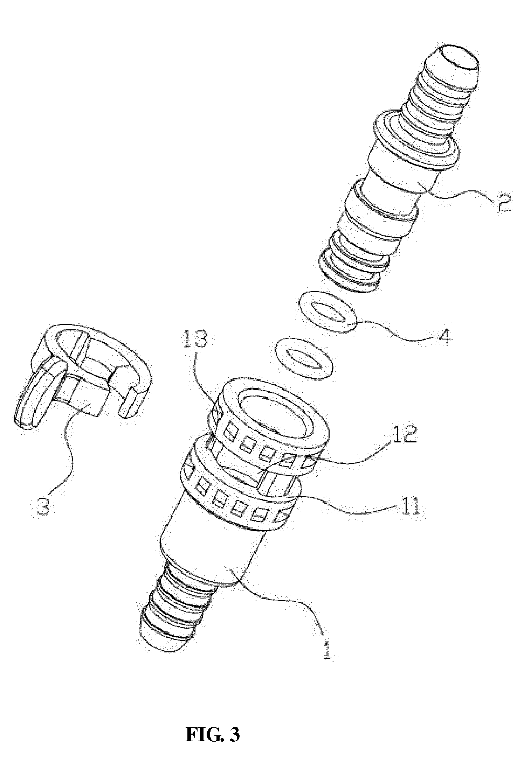

Then, refer to Fig. 3 for an exploded view of a fast detachable pipe connector according to an embodiment of the present invention. As shown in Fig. 3, in order to ensure the balance of the force applied, on the first pipe connector 1 is provided with a pair of symmetric openings, so that on the elastic ring 3 is provided with a pair of barrier blocks 31 corresponding to the openings.

A seal ring 4 is provided at the lower end of the second ring shape slot 21, and between the first pipe connector 1 and the second pipe connector 2.

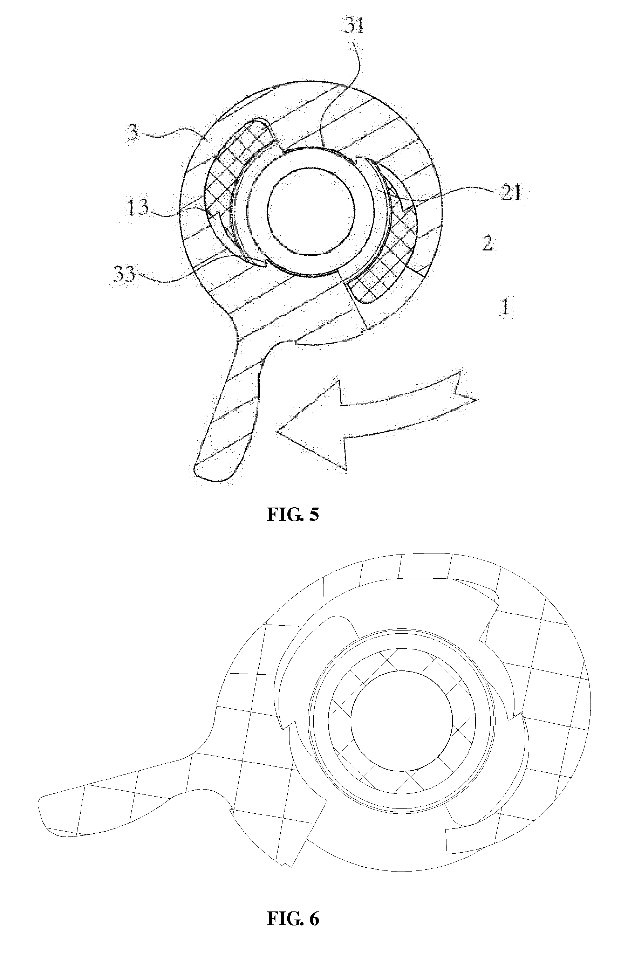

Refer to Figs. 5 and 6 respectively for a schematic diagram of an elastic ring before a handle is pushed according to an embodiment of the present invention; and a schematic diagram of an elastic ring after a handle is pushed according to an embodiment of the present invention. As shown in Figs. 5 and 6, the fast detachable pipe connector of the present invention can be implemented as follows:

In attaching the fast detachable pipe connector of the present invention, all it has to do is to insert the second pipe connector into the first pipe connector, so that the barrier block 31 is inserted into the second ring shape slot 21, to complete the installation. Due to the action of the slant face 34, no other force has to be applied. While in detaching the fast detachable pipe connector of the present invention, all it has to do is to push the handle slightly to force the elastic ring 3 to open, to make the barrier block 31 to release the restriction on the second ring shape slot 21. Then the detachment of the fast detachable pipe connector can be achieved by pulling out the second pipe connector 2.

Compared with the conventional pipe connector of the prior art, the fast detachable pipe connector of the present invention has the following advantages: 1.utilizing the least components to realize the same function; 2. providing the new approach of operation; and 3. having the merits of easy to produce, low cost, and convenient to operate.

The above detailed description of the preferred embodiment is intended to describe more clearly the characteristics and spirit of the present invention. However, the preferred embodiments disclosed above are not intended to be any restrictions to the scope of the present invention. Conversely, its purpose is to include the various changes and equivalent arrangements which are within the scope of the appended claims.

## Claims

1. A fast detachable pipe connector comprising: a first pipe connector, and a second pipe connector inserted into said first pipe connector, and it is **characterized in that**, in a center of said first pipe connector is provided with a first ring shape slot, while in the first ring shape slot is provided with an elastic ring having indention, on a bottom portion of said first ring shape slot is provided with an opening in communication with interior of said first pipe connector, on said elastic ring is provided with a barrier block extending from said opening to interior of said first pipe connector, on the second pipe connector is provided with a second ring shape slot acting in cooperation with said barrier block, and a handle is provided near said opening of said elastic ring.

2. The fast detachable pipe connector as claimed in claim 1,wherein a barrier slot is provided on an outer wall of said first pipe connector near a side of said opening, to act in cooperation with a side end face of said barrier block.

3. The fast detachable pipe connector as claimed in claim 2, wherein an end face of said barrier block acting in cooperation with said second ring shape slot, is a slant face, said slant face comes near to an axis line of said first pipe connector from top to bottom.

4. The fast detachable pipe connector as claimed in claim 3, wherein an upper end of said slant face is on a same level with an inner wall of said first pipe connector, or it is located on an outer perimeter of an inner wall of said first pipe connector.

5. The fast detachable pipe connector as claimed in claim 1, wherein on said first pipe connector is provided with a pair of symmetric openings, so that on said elastic ring is provided with a pair of said barrier blocks corresponding to said openings.

6. The fast detachable pipe connector as claimed in claim 2, wherein on said first pipe connector is provided with said pair of symmetric openings, so that on said elastic ring is provided with said pair of said barrier blocks corresponding to said openings.

7. The fast detachable pipe connector as claimed in claim 3,wherein on said first pipe connector is provided with said pair of symmetric openings, so that on said elastic ring is provided with said pair of said barrier blocks corresponding to said openings.

8. The fast detachable pipe connector as claimed in claim 4,wherein on said first pipe connector is provided with said pair of symmetric openings, so that on said elastic ring is provided with said pair of said barrier blocks corresponding to said openings.

9. The fast detachable pipe connector as claimed in claim 5, wherein a seal ring is provided at a lower end of said second ring shape slot, and between said first pipe connector and said second pipe connector.

10. The fast detachable pipe connector as claimed in claim 6, wherein said seal ring is provided at said lower end of said second ring shape slot, and between said first pipe connector and said second pipe connector.

11. The fast detachable pipe connector as claimed in claim 7, wherein said seal ring is provided at said lower end of said second ring shape slot, and between said first pipe connector and said second pipe connector.

12. The fast detachable pipe connector as claimed in claim 8, wherein said seal ring is provided at said lower end of said second ring shape slot, and between said first pipe connector and said second pipe connector.
